# EUROPÄISCHE PATENTSCHRIFT

(11) **EP 4 331 908 B1**
(45) Veröffentlichungstag und Bekanntmachung des Hinweises auf die Patenterteilung: **04.12.2024**
(21) Anmeldenummer: 23191498.7
(22) Anmeldetag: 15.08.2023
(51) Int. Cl.: B60N 2/02, B60N 2/809, B60N 2/865

(54) **KOPFSTÜTZE**
HEADREST
APPUI-TÊTE

(30) Priorität: 02.09.2022 DE 102022122310
(43) Veröffentlichungstag der Anmeldung: 06.03.2024
(73) Patentinhaber: GRAMMER AG, 92289 Ursensollen (DE)
(72) Erfinder: Kotz, Maximilian, 92286 Rieden (DE); Nuss, Ralph, 92284 Poppenricht (DE)
(74) Vertreter: Roche, von Westernhagen & Ehresmann

(56) Entgegenhaltungen:
- CN-A- 112 977 216
- CN-A- 113 525 205
- DE-A1- 102018 109 611
- US-A1- 2017 088 025

## Beschreibung

Die Erfindung betrifft eine Kopfstütze für einen Fahrzeugsitz. Ein Fahrzeug kann im Sinne der Erfindung ein Land-, Luft- oder Wasserfahrzeug sein.

In der DE 10 2018 109 611 A1 ist eine Kopfstütze offenbart, die ein Kopfteil sowie ein Halteelement aufweist. Mit dem Halteelement ist die Kopfstütze an der Rückenlehne eines Fahrzeugsitzes befestigt. An dem Kopfteil kann sich ein Sitzinsasse abstützen. Das Kopfteil ist mittels einer Viergelenkvorrichtung, die an zwei Seitenbereichen der Kopfstütze jeweils zwei hintereinander angeordnete Lenker umfasst, zwischen einer ersten Position und einer zweiten Position bewegbar.

Mit einer Verstellvorrichtung ist die Kopfstütze zwischen der ersten und der zweiten Position bewegbar. Die Verstellvorrichtung umfasst eine mit einem Lenker fest verbundene erste Kulisse sowie eine fest mit dem Kopfteil oder dem Halteelement verbundene zweite Kulisse. Beide Kulissen sind von einem Stellelement durchgriffen. Die Form der Kulissen wird aus der Relativposition der Kulissen in allen Positionen der Bewegung zwischen der ersten Position und der zweiten Position konstruiert. Das Stellelement ist z.B. von einem Spindelantrieb motorisch angetrieben.

Die DE 10 2010 007 942 A1 beschreibt eine Kopfstütze mit einem Kopfanlageteil, welches mit einem Viergelenk an einer Basis der Kopfstütze gehalten ist. Das Viergelenk umfasst ein ersten Lenkerpaar sowie ein zweites Lenkerpaar, wobei jedes Lenkerpaar Schwenkachsen mit der Basis sowie mit dem Kopfanlageteil bildet. An einem der Lenkerpaare sind Raststrukturen ausgebildet, die mit einem schwenkbar an der Basis gehaltenen Riegel in Eingriff bringbar sind, um das Kopfanlageteil in der eingestellten Position zu arretieren.

In der DE 10 2018 005 316 A1 ist eine Kopfstütze beschrieben, welche ein Halteelement sowie eine Kopfanlage umfasst. Die Kopfanlage ist bildet mit dem Halteelement sowie mit einem ersten Lenker und einem zweiten Lenker ein Viergelenk. Die Kopfanlage weist einen bewegbaren Riegel mit Riegelstrukturen auf, welche mit Riegelstrukturen lösbar in Eingriff bringbar sind, die an einem der Lenker ausgebildet sind.

In der CN 113 525 205 A ist eine Kopfstütze aus dem Stand der Technik beschrieben, welche ein Kopfteil, ein Halteelement, eine Viergelenkvorrichtung und eine Antriebsvorrichtung umfasst.

Die Kopfstütze sollte hinsichtlich der Möglichkeiten ihrer Verstellung weitergebildet werden.

Es war Aufgabe der Erfindung eine Kopfstütze zu schaffen, die in Bezug auf ihre Verstellung weitere vorteilhafte Ausführungen bereitstellt.

Die Aufgabe wurde gelöst durch eine Kopfstütze mit den Merkmalen des Anspruchs 1.

Die Kopfstütze umfasst ein Kopfteil und eine Haltevorrichtung mit wenigstens einem Halteelement. Das Kopfteil bildet ein Widerlager für den Kopf des Insassen. Die Haltevorrichtung ist zur Lagerung des Kopfteils an einem Fahrzeugsitz bestimmt. Die Haltevorrichtung ist unbewegbar oder verstellbar mit dem Fahrzeugsitz verbunden. Z.B. ist die Haltevorrichtung in unterschiedliche Höhenpositionen relativ zu dem Fahrzeugsitz einstellbar und ggf. in diesen Positionen fixierbar.

Mit einer Verstellvorrichtung umfassend eine Viergelenkvorrichtung mit wenigstens einer ersten Lenkervorrichtung und einer zweiten Lenkervorrichtung ist das Kopfteil relativ zu der Haltevorrichtung zwischen einer ersten Position und einer zweiten Position auf einer Koppelkurve bewegbar mit dem Halteelement verbunden. Jede Lenkervorrichtung bildet z.B. wenigstens ein Schwenkgelenk mit der Haltevorrichtung und wenigstens ein Schwenkgelenk mit dem Kopfteil.

Eine Antriebsvorrichtung der Kopfstütze ist dazu ausgebildet, die Position des Kopfteils relativ zu dem Halteteil zwischen der ersten Position und der zweiten Position zu verstellen und / oder zu arretieren. Die Antriebsvorrichtung umfasst eine Kulisse, ein Stellelement, das in die Kulisse eingreift sowie eine Führung, welche die Kulisse auf einer Bewegungsbahn zwischen einer primären Position und einer sekundären Position führt. Die Kulisse und das Stellelement sind unterschiedlichen Bauteilen der Viergelenkvorrichtung zugeordnet.

Erfindungsgemäß umfasst die Verstellvorrichtung eine Kulisse, welche an einem ersten Bauteil der Viergelenkvorrichtung auf einer definierten Bahn bewegbar geführt ist und ein an einem zweiten Bauteil der Viergelenkvorrichtung fest angeordnetes Stellelement, welches in die Kulisse eingreift.

Ein Vorteil der bewegbaren Kulisse besteht darin, dass ein Kulissenbauteil, welches die Kulisse aufweist, große Führungsflächen aufweist, mit welchen es an einem Bauteil der Viergelenkvorrichtung geführt werden kann. Z.B. kann die Kulisse an einem der Bauteile Haltevorrichtung oder Kopfteil geführt sein und das Stellelement ist kleinbauend an einem anderen Bauteil der Viergelenkvorrichtung gehalten.

Die Kulisse ist z.B. einem Kulissenbauteil zugeordnet. Mit anderen Worten, die Kulisse ist z.B. bewegbar an einem der Bauteile der Viergelenkvorrichtung geführt und in einem separaten Bauteil ausgebildet.

Die Kulisse ist z.B. an dem Halteelement, an dem Kopfteil oder an einer der Lenkervorrichtungen, d.h. an der ersten Lenkervorrichtung oder an der zweiten Lenkervorrichtung, bewegbar geführt. Das Stellelement ist z.B. mit einem anderen Bauteil der Viergelenkvorrichtung, d.h. mit dem Halteelement, mit einer der Lenkervorrichtungen oder alternativ mit dem Kopfteil fest verbunden. Wesentlich ist, dass die Führung der Kulisse und das Stellelement unterschiedlichen Bauteilen der Viergelenkvorrichtung zugeordnet sind.

Vorteilhaft sind Bauteilpaarungen, bei welchen sich der Weg zwischen Stellelement und Kulisse bei der Bewegung des Kopfteils zwischen der ersten Position und der zweiten Position kontinuierlich vergrößert oder verkleinert. Das sind z.B. Paarungen, zwischen Kopfteil oder Haltevorrichtung und einem der Lenker oder Paarungen zwischen zwei Lenkern.

Es ist z.B. eine Ausführungsform möglich, bei welcher die Kulisse an dem Kopfteil oder an dem Halteelement bewegbar geführt ist und das Stellelement mit einer der Lenkervorrichtungen fest verbunden ist. Alternativ kann auch die Kulisse an einer der Lenkervorrichtung bewegbar geführt sein und das Stellelement ist fest an dem Halteelement oder an dem Kopfteil angeordnet. Auch bei dieser Ausführungsform ist eine Anordnung von Kulisse und Stellelement mit geringer Entfernung möglich. Darüber hinaus bietet die Ausführungsform eine große Flexibilität der Konstruktion der Kopfstütze.

Möglich sind auch Paarungen zwischen Kopfteil und Haltevorrichtung oder zwischen erstem Lenker und zweitem Lenker unterschiedlicher Lenkervorrichtungen.

Die Kulisse ist z.B. entlang einer linearen Bahn bewegbar. Eine lineare Bewegung stellt geringe Anforderungen an die Führung der Kulisse oder des Stellelements. Darüber ist der Antrieb mit einem herkömmlichen Linearantrieb möglich, was den Konstruktionsaufwand verringert. Alternativ kann die Kulisse auch auf einer nichtlinearen Bahn translatorisch bewegbar sein. Das kann z.B. eine Kurvenbahn oder eine frei geformte Bahn sein.

Die Führung der bewegbaren Kulisse entlang einer Bewegungsbahn erfolgt z.B. in Form einer fest an einem der Bauteile der Viergelenkvorrichtung gehaltenen zweiten Kulisse. Als Kulisse wird im Sinne der Erfindung jede Form von Bahnbegrenzung verstanden, von welchen Flächen eines Kulissenbauteils, in welchem die Kulisse ausgebildet ist, bewegbar geführt sind. Die Bahnbegrenzungen erlauben lediglich eine Bewegung auf einer Bewegungsbahn in entgegengesetzte Orientierungen.

Eine Längsmittelachse der Kulisse ist entsprechend einer Bewegungsbahn konstruiert, welche ein Stellelement relativ zu einem Kulissenbauteil oder einer Kulissenstruktur durchläuft, während sich das Kopfteil zwischen der ersten Position und der zweiten Position bewegt und während sich zugleich das Kulissenbauteil zwischen einer primären Position und einer sekundären Position innerhalb der Führung bewegt. Mit anderen Worten, während sich z.B. das Kopfteil zwischen der ersten und der zweiten Position bewegt, verlagert sich auch das Kulissenbauteil relativ zu der Führung zwischen der primären und der sekundären Position. Die dabei durchlaufene Bewegungsbahn des Stellelements relativ zu dem Kulissenbauteil ergibt die Form der Kulisse.

Die Lenker des Viergelenks weisen z.B. die gleichen oder unterschiedliche Längen auf. Mit Hilfe dieser Merkmale kann die Koppelkurve des Viergelenks und damit die Bewegung des Kopfteils beeinflusst werden.

Die Lenker des Viergelenks sind z.B. parallel oder nichtparallel zueinander angeordnet. Auch mit diesen Merkmalen ist die Koppelkurve des Viergelenks beeinflussbar.

Gemäß einer Ausführungsform weist jede Lenkervorrichtung wenigstens zwei quer zu der Verstellrichtung versetzt angeordnete Lenker auf, wobei ein erster Lenker an einem ersten Seitenbereich des Kopfteils und ein zweiter Lenker an einem zweiten Seitenbereich des Kopfteils angelenkt ist. Die quer zur Verstellrichtung versetzt angeordneten Lenker sind z.B. nur durch die Gelenke mit dem Kopfteil miteinander verbundenen. Gemäß einer alternativen Ausführung können sie zur Versteifung zusätzliche Verbindungsstreben aufweisen.

Die Haltevorrichtung ist z.B. verstellbar an dem Fahrzeugsitz gelagert. Diese Merkmale ermöglichen zusätzlich zu der Bewegung in entgegengesetzte horizontale Richtungen x1 und x2 eine Verstellung des Kopfanlageteils in entgegengesetzte vertikale Richtungen z1 und z2.

Wenigstens zwei Lenkervorrichtungen der Viergelenkvorrichtung sind z.B. in Verstellrichtung hintereinander angeordnet. Die Lenkervorrichtungen sind z.B. in einer mittleren Position etwa vertikal ausgerichtet. Bei z.B. einer etwa vertikalen Anordnung der Lenker in mittlerer Stellung kann - lateral betrachtet - eine sehr schmale Bauweise der Verstellvorrichtung erreicht werden.

Das Kopfteil umfasst z.B. eine Kopfanlageplatte sowie einen hinteren Fortsatz. Alternativ oder zusätzlich zu der vorgenannten vertikalen Verstellung ist die Kopfanlageplatte relativ zu dem Fortsatz bewegbar gelagert. Damit ergibt sich eine alternative oder zusätzliche Verstellmöglichkeit der Vertikalverstellung. In letzterem Fall kann der Verstellspielraum der Vertikalverstellung vergrößert werden.

Das Stellelement oder die Kulisse ist z.B. von einem Antrieb der Antriebsvorrichtung angetrieben. Auf den Antrieb kommt es bei der Erfindung nicht an. Es kann ein geeigneter Antrieb ausgewählt werden. Der Antrieb umfasst z.B. einen Motor und ein Getriebe. Es können z.B. Spindel-, Zahnstangen-, Riemen-, Ketten-, Seilzugantriebe verwendet werden.

Zusätzlich ist z.B. eine Steuerung vorgesehen, welche die Motorfunktionen regelt, z.B. den Motor an- und ausschaltet und ggf. die Drehrichtung des Motors regelt.

Die Steuerung ist z.B. von einem Bedienelement bedienbar, das in dem Fahrzeuginnenraum, z.B. an einem mit der Kopfstütze versehenen Fahrzeugsitz, angeordnet ist.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben oder Hochkommata, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst, solange die resultierende Kopfstütze zum Schutzumfang gehört, der durch die Ansprüche definiert ist.

Es zeigen:
Fig. 1 eine Seitenansicht eines ersten Ausführungsbeispiels der erfindungsgemäßen Kopfstütze, wobei sich ein Kopfteil in einer hinteren Position befindet und wobei ein Kulissenbauteil an einem Lenker bewegbar geführt ist,
Fig. 2 eine Ansicht der Kopfstütze gemäß Ansichtspfeil A in Fig. 1, wobei das Kopfteil der Übersichtlichkeit halber nicht vollständig dargestellt ist,
Fig. 3 eine Seitenansicht gemäß Fig. 1, wobei sich das Kopfteil in einer mittleren Position zwischen der hinteren und einer vorderen Position befindet,
Fig. 4 eine Seitenansicht gemäß Fig. 3, wobei sich das Kopfteil in der vorderen Position befindet,
Fig. 5 eine Seitenansicht eines zweiten Ausführungsbeispiels der erfindungsgemäßen Kopfstütze, wobei sich das Kopfteil in einer hinteren Position befindet, und wobei das Kulissenbauteil an der Haltevorrichtung bewegbar geführt ist,
Fig. 6 eine Seitenansicht gemäß Fig. 5, wobei sich das Kopfteil in einer mittleren Position zwischen der hinteren und einer vorderen Position befindet,
Fig. 7 eine Seitenansicht gemäß Fig. 5, wobei sich das Kopfteil in der vorderen Position befindet.
Fig. 8 eine Seitenansicht eines dritten Ausführungsbeispiels der Kopfstütze, wobei sich das Kopfteil in einer hinteren Position befindet, und wobei das Kulissenbauteil an dem Kopfanlageteil bewegbar geführt ist,
Fig. 9 eine Seitenansicht gemäß Fig. 8, wobei sich das Kopfteil in einer mittleren Position zwischen der hinteren und einer vorderen Position befindet,
Fig. 10 eine Seitenansicht gemäß Fig. 8, wobei sich das Kopfteil in der vorderen Position befindet.
Fig. 11 eine Seitenansicht eines vierten Ausführungsbeispiels der Kopfstütze, wobei sich das Kopfteil in der vorderen Position befindet,
Fig. 12 eine Seitenansicht gemäß Fig. 11, wobei sich das Kopfteil in einer hinteren Position befindet.

Eine Kopfstütze gemäß einem ersten Ausführungsbeispiel insgesamt ist in den Fig. mit dem Bezugszeichen 10 bezeichnet.

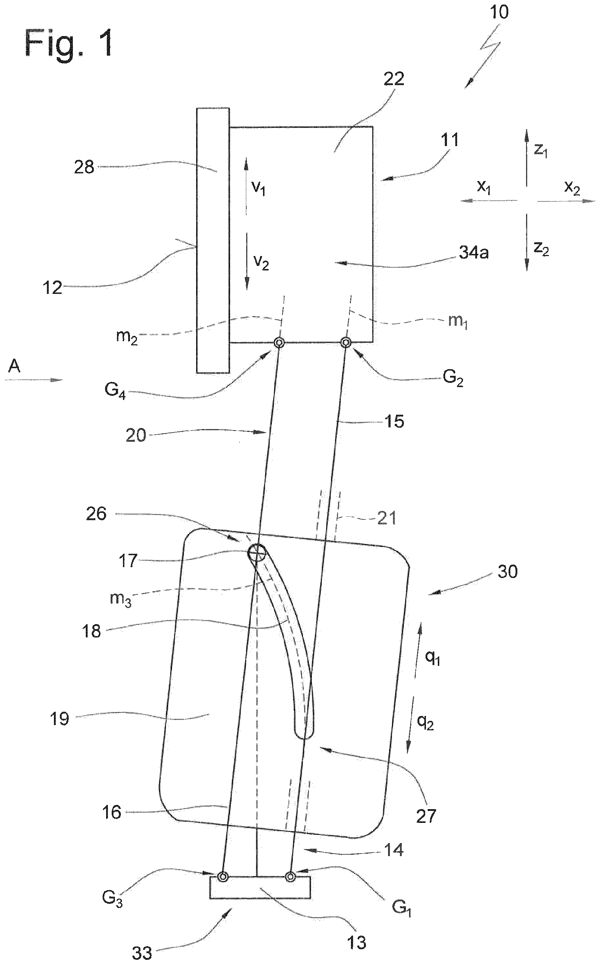

Die Kopfstütze 10 umfasst gemäß Fig. 1 ein Kopfteil 11 mit einer Kopfanlagefläche 12. Die Kopfanlagefläche 12 bildet ein Widerlager für den Kopf eines Insassen eines nicht dargestellten Fahrzeugsitzes, an dem die Kopfstütze 10 befestigbar ist. Die Kopfstütze 10 umfasst ferner eine Haltevorrichtung 33 mit wenigstens einem Halteelement 13, die Mittel zur verstellbaren oder unverstellbaren Befestigung der Kopfstütze 10 an dem Fahrzeugsitz bereitstellt. Z.B. ist die Haltevorrichtung 33 oder das Halteelement 13 relativ zu dem Fahrzeugsitz - insbesondere zu einer Rückenlehne des Fahrzeugsitzes - vertikal in Richtungen z1 und z2 verstellbar.

Mittels einer eine Viergelenkvorrichtung 14 umfassende Verstellvorrichtung 20 ist das Kopfteil 11 auf einer Koppelkurve in die Richtungen x1 und x2 zwischen einer ersten hinteren und einer zweiten vorderen Position bewegbar. Die Viergelenkvorrichtung 14 umfasst eine erste Lenkervorrichtung 15 sowie eine zweite Lenkervorrichtung 16. Die Lenkervorrichtung 15 bildet mit der Haltevorrichtung 33 ein Schwenkgelenk G1 mit einer Schwenkachse a1 sowie mit dem Kopfteil 11 ein Schwenkgelenk G2 mit einer Schwenkachse a2. Auch die Lenkervorrichtung 16 bildet mit der Haltevorrichtung 33 ein Schwenkgelenk G3 mit einer Schwenkachse a3 sowie mit dem Kopfteil 11 ein Schwenkgelenk G4 mit einer Schwenkachse a4.

In diesem Ausführungsbeispiel sind Längsachsen m1 und m2 der Lenkervorrichtungen 15 und 16 parallel zueinander. Gemäß einer alternativen Ausführungsform könnten die Längsachsen m1 und m2 auch derart ausgebildet sein, dass sich mit dem Halteelement 13 und dem Kopfteil 11 ein Trapezviergelenk ergibt, die Längsachsen m1 und m2 also nicht parallel sind. In diesem Fall wäre der Abstand der Gelenke G1 und G3 ungleich dem Abstand der Gelenke G2 und G4, wobei der Abstand zwischen den Gelenken G1 und G3 größer oder kleiner als der Abstand zwischen den Gelenken G2 und G4 sein kann.

Die Lenkervorrichtung 15 weist zwischen den Gelenken G1 und G2 eine Länge L1 und die Lenkervorrichtung 16 misst zwischen den Gelenken G3 und G4 eine Länge L2. Im vorliegenden Ausführungsbeispiel sind die Längen L1 und L2 gleich. Die Länge L1 kann aber gemäß alternativen Ausführungen größer oder kleiner sein als die Länge L2.

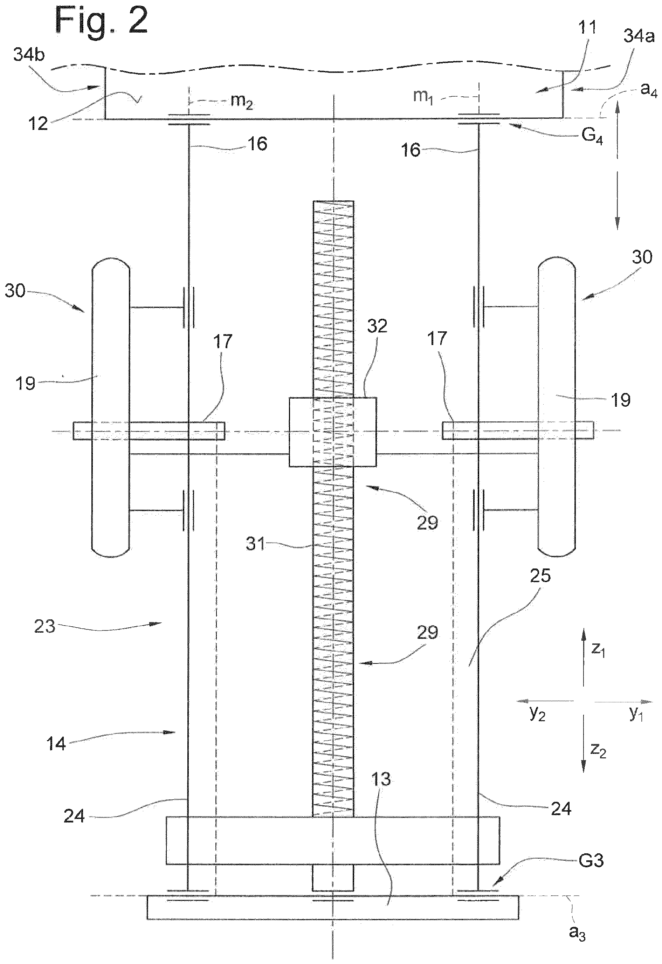

Z.B. kann die Lenkervorrichtung 15 wenigstens zwei quer zur Verstellrichtung x1 und x2 parallele Lenker 24 aufweisen (siehe Fig. 2), wobei ein Lenker 24 an einem Seitenbereich 34a und ein Lenker 24 an einem Seitenbereich 34b des Kopfteils 11 angelenkt ist. Ebenso kann die Lenkervorrichtung 16 einen oder wenigstens zwei quer zur Verstellrichtung parallele Lenker 24 aufweisen, so dass Verstellvorrichtungen 20 vorhanden sind. Alle Lenker 24 der Lenkervorrichtung 15 bilden z.B. Schwenkgelenke G1 mit der Haltevorrichtung 33 und Schwenkgelenke G2 mit dem Kopfteil 11. Entsprechend bilden alle Lenker 24 der Lenkervorrichtung 16 Schwenkgelenke G3 mit der Haltevorrichtung 33 und Schwenkgelenke G4 mit dem Kopfteil 11. Die parallelen Lenker 24 der Lenkervorrichtungen 15 und 16 sind z.B. bezüglich der y-Richtung voneinander beabstandet.

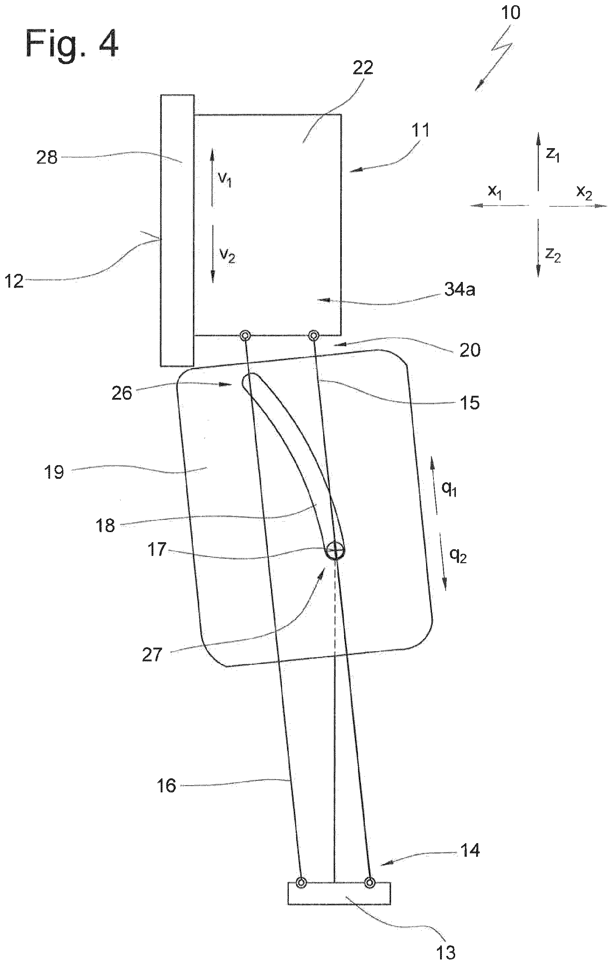

Im vorliegenden Ausführungsbeispiel umfasst das Kopfteil 11 einen hinteren Fortsatz 22, welcher mit den Lenkervorrichtungen 15 und 16 die Schwenkgelenke G2 und G4 bildet. Das Kopfteil 11 ist auf diese Weise auf einer Koppelkurve zwischen der ersten hinteren Position (siehe Fig. 1) und der zweiten vorderen Position (siehe Fig. 4) bewegbar. Die von der Viergelenkvorrichtung 14 umfassten Teile, nämlich Kopfteil 11, Haltevorrichtung 33, Lenkervorrichtung 15 und Lenkervorrichtung 16 weisen in jeder Position des Kopfteils 11 eine definierte Relativposition zueinander auf.

Mit einer Antriebsvorrichtung 30 ist jede der definierten Relativpositionen der Viergelenkvorrichtung 14 einstellbar. Während die Verstellvorrichtung 20 bei allen beschriebenen Ausführungsbeispielen wie zuvor beschrieben ausgeführt ist, werden nachfolgend unterschiedliche erfindungswesentliche Varianten der Antriebsvorrichtungen 30, 30', 30" und 30‴ beschrieben.

Die Antriebsvorrichtung 30 umfasst eine Kulisse 18 mit einer Längsachse m3, an einem der Elemente der Viergelenkvorrichtung 14 sowie ein Stellelement 17, welches derart in die Kulisse 18 eingreift, dass es von der Kulisse 18 geführt werden kann. Das Stellelement 17 ist einem anderen der Elemente der Viergelenkvorrichtung 14 zugeordnet.

Bei einem ersten in den Fig. 1 bis 4 dargestellten Ausführungsbeispiel der Kopfstütze 10 ist die Kulisse 18 mit einer Führung 21 bewegbar an einer der Lenkervorrichtungen 15 oder 16, hier mit der Lenkervorrichtung 15, geführt. Im vorliegenden Beispiel ist jeder Verstellvorrichtung 20 ein Stellelement 17 sowie ein Kulissenbauteil 19 zugeordnet. Das Stellelement 17 ist fest mit dem Halteelement 13 verbunden. Zur Bewegung eines Kulissenbauteils 19, an welchem die Kulisse 18 ausgebildet ist, ist ein Antrieb 23 vorgesehen, welcher weiter unten erläutert wird.

Grundsätzlich kann das Kulissenbauteil 19 auf einer beliebigen Bahn geführt sein. Der Einfachheit halber ist das Kulissenbauteil 19 in dem ersten Ausführungsbeispiel mittels der Führung 21 auf einer linearen Bahn geführt und bewegt sich zwischen einer primären Position und einer sekundären Position entlang einer Längsachse, die parallel zu der Längsachse m1 ist. Das Stellelement 17 greift in die Kulisse 18 ein und ist unbewegbar fest mit dem Halteelement 13 verbunden. Die Führung 21 ist lediglich in Fig. 1 erkennbar und dort schematisch mit unterbrochenen Linien angedeutet.

Das Stellelement 17 bewegt sich während der Bewegung des Kulissenbauteils 19 von der primären Position in die sekundäre Position relativ zu der Kulisse 18 von einem ersten Endbereich 26 zu einem zweiten Endbereich 27 der Kulisse 18. Die Bewegung des Stellelements 17 zwischen der primären Position und der sekundären Position erfolgt, um das Kopfteil 11 von der ersten Position in die zweite Position zu bewegen.

Im vorliegenden Beispiel ist die Kulisse 18 in einem separaten Kulissenbauteil 19 ausgebildet, welches an der Lenkervorrichtung 15 bewegbar geführt ist. Das an dem Halteelement 13 unbewegbar gehaltene Stellelement 17 greift in die Kulisse 18 ein.

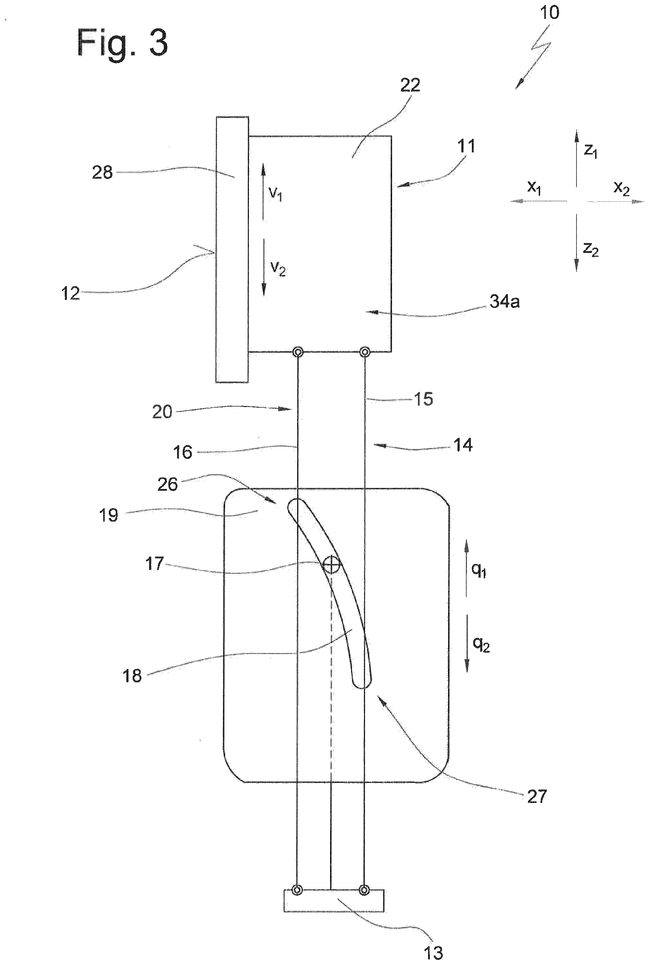

Gemäß Fig. 1 befindet sich das Stellelement 17 an dem Endbereich 26 der Kulisse 18 in der primären Position, wobei sich das Kopfteil 11 in der ersten Position befindet. In Fig. 3 wurde das Kulissenbauteil 19 derart in Richtung q1 bewegt, dass das Stellelement 17 in einen mittleren Bereich der Kulisse 18 angeordnet ist. Dabei wurde das Kopfteil 11 in eine mittlere Position zwischen der ersten Position und der zweiten Position verstellt. Eine Bewegung des Kulissenbauteils 19 in Richtung q1 in eine sekundäre Position (siehe Fig. 4) derart, dass das Stellelement 17 in dem Endbereich 27 der Kulisse 18 angeordnet ist, hat eine Bewegung des Kopfteils 11 in die zweite Position zur Folge.

Die umgekehrte Bewegung des Kulissenbauteils 19 in dem Sinne, dass sich das Stellelement 17 relativ zu der Kulisse 18 von dem zweiten Endbereich 27 zu dem ersten Endbereich 26 bewegt, hat eine Verstellung des Kopfteils 11 in Richtung x2 von der zweiten Position in die erste Position zur Folge.

Bei der Bewegung des Kopfteils 11 zwischen der ersten Position und der zweiten Position wird das Kopfteil 11 in Richtung x1 bewegt und geringfügig auch in Richtung z1 und z2 verstellt. Die Ursache dafür ist die Schwenkbewegung der Lenkervorrichtung 15 um die Schwenkachse a1 sowie die Schwenkbewegung der Lenkervorrichtung 16 um die Schwenkachse a3. Das Gelenk G2 führt daher jeweils eine Kreisbewegung um die Schwenkachse a1 und das Gelenk G4 eine Kreisbewegung um die Schwenkachse a3 aus.

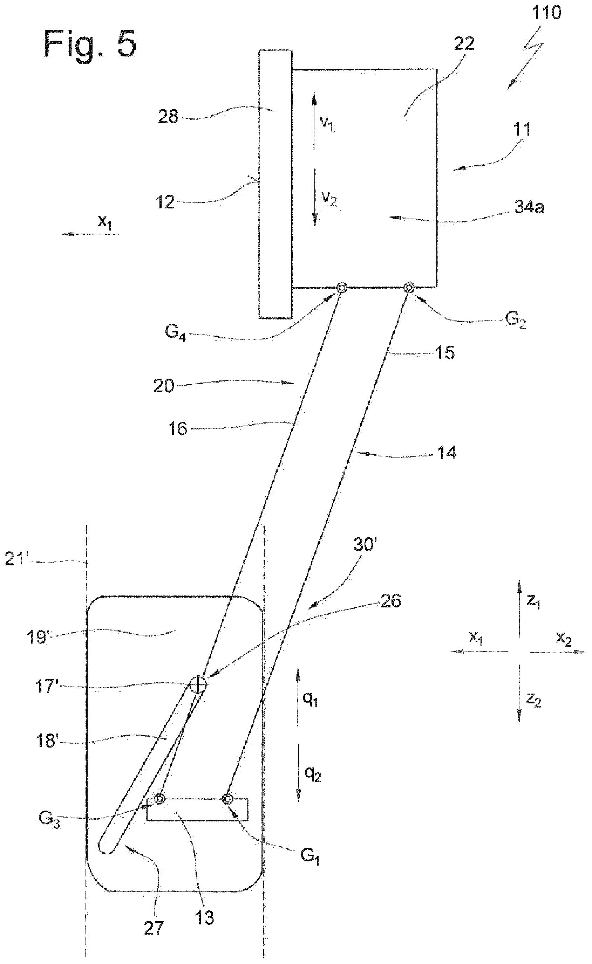

Ein zweites Ausführungsbeispiel der Kopfstütze 110 ist in den Fig. 5 bis 7 dargestellt. Bei dem zweiten Ausführungsbeispiel ist die Verstellvorrichtung 20 wie bei dem ersten Beispiel ausgebildet. Das zweite Ausführungsbeispiel unterscheidet sich hinsichtlich der Antriebsvorrichtung. Gemäß einer Antriebsvorrichtung 30' der zweiten Ausführungsform (siehe Fig. 5) ist das Stellelement 17' unbewegbar fest mit der Lenkervorrichtung 16 verbunden und die Kulisse 18' ist mittels einer Führung 21 * bewegbar an dem Halteelement 13, geführt. Die Kulisse 18' ist hier an einem Kulissenbauteil 19' ausgebildet.

Mittels eines Antriebs 23, auf den weiter unten genauer eingegangen wird, ist die Kulisse 18 entlang einer Bewegungsbahn bewegbar, die von der Führung 21' definiert ist. Die Bewegungsbahn kann entsprechend der Erfindung eine translatorische, eine rotatorische oder auch eine gemischte Bewegung mit translatorischen und rotatorischen Anteilen sein. In diesem Ausführungsbeispiel wird die Kulisse 18' von der Führung 21 ` auf einer linearen Bewegungsbahn geführt. Das ermöglicht die Bewegung der Kulisse 18' mittels eines Linearantriebs.

Das an der Lenkervorrichtung 16 fest angeordnete Stellelement 17' greift in die Kulisse 18' ein, welche dem Kulissenbauteil 19' zugeordnet ist, das mit der Führung 21' an dem Halteelement 13 geführt ist.

Bei der Bewegung des Kopfteils 11 von der ersten Position in die zweite Position und einer gleichzeitigen Bewegung des Kulissenbauteils 19' relativ zu dem Stellelement 17' von einer primären Position in eine sekundäre Position bewegt sich das Stellelement 17' innerhalb der Kulisse 18' zwischen einem ersten Endbereich 26 und einem zweiten Endbereich 27 und zwingt dabei die Viergelenkvorrichtung 14 in bestimmte Positionen.

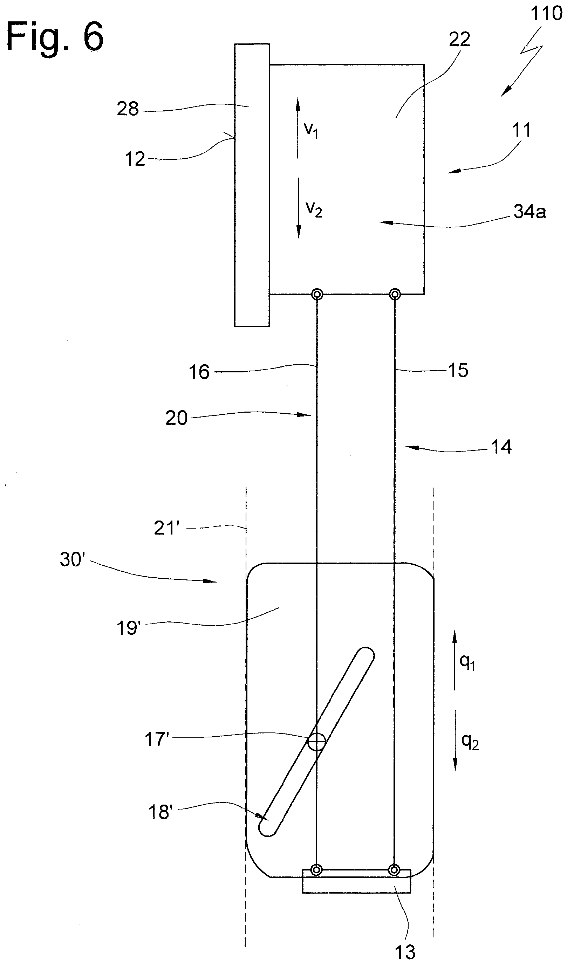

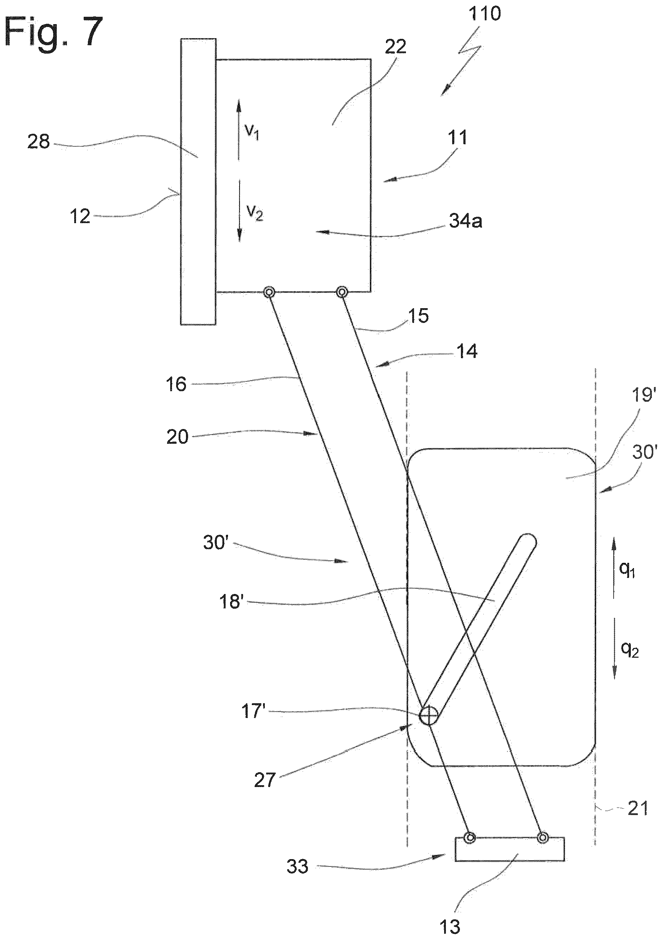

Gemäß Fig. 5 befindet sich das Kopfteil 11 in der ersten Position. Das Stellelement 17' ist an dem Endbereich 26 der Kulisse 18' angeordnet. Wird das das Kulissenbauteil 19' in Richtung q1 bewegt, verlagert sich das Kopfteil 11 in Richtung x1. Gemäß Fig. 6 ist das Kopfteil 11 in eine mittlere Position zwischen der ersten Position und der zweiten Position verlagert. Das Stellelement 17' ist etwa in der Mitte der Kulisse 18' positioniert. Eine weitere Bewegung des Kulissenbauteils 19' in Richtung q1 hat zur Folge, dass sich das Kopfteil 11 in Richtung x1 die zweite Position verlagert (siehe Fig. 7). Das Stellelement 17' befindet sich dann an dem Endbereich 27 der Kulisse 18'.

Wird das Kulissenbauteil 19' in Richtung q2 von der sekundären Position in die primäre Position bewegt, verlagert sich das Kopfteil von der zweiten Position in die erste Position.

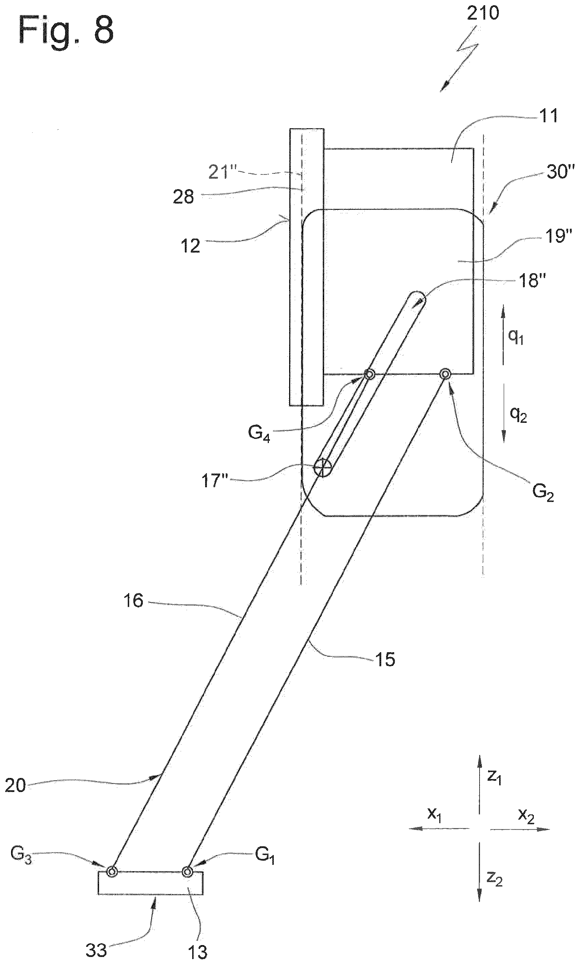

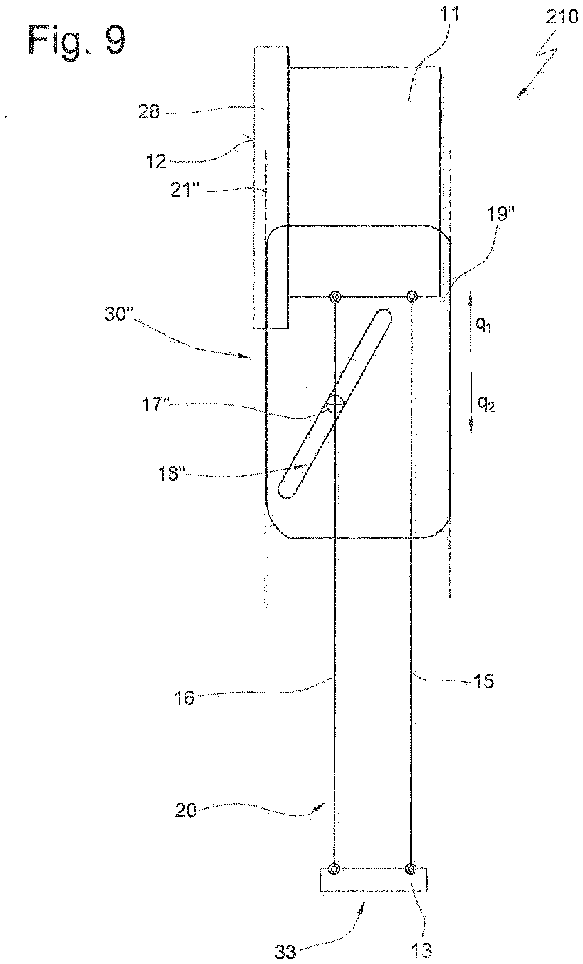

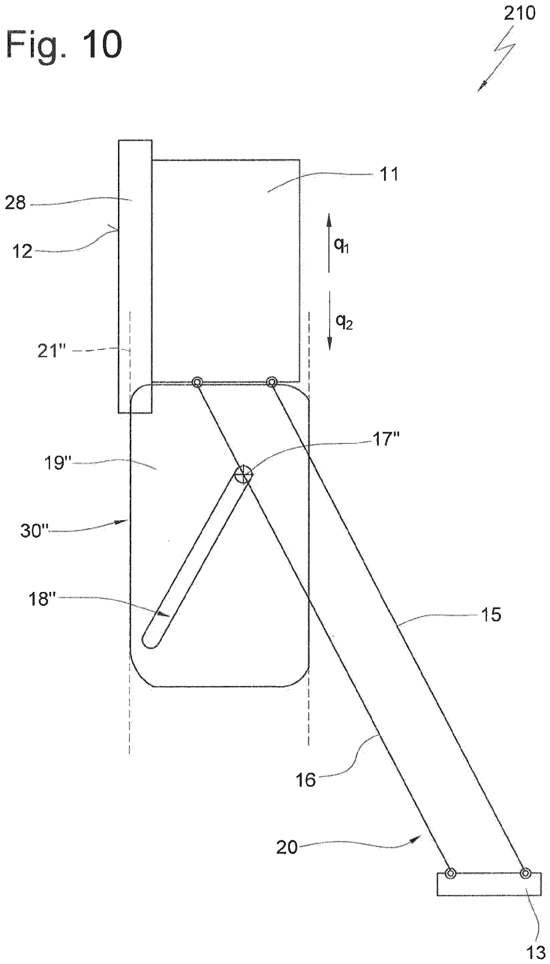

Ein drittes Ausführungsbeispiel der Kopfstütze 210 ist in den Fig. 8 bis 10 dargestellt. Während die Verstellvorrichtung 20 entsprechend dem ersten und zweiten Ausführungsbeispiel ausgebildet ist, sind Unterschiede hinsichtlich der Antriebsvorrichtung 30" vorhanden. Bei diesem Ausführungsbeispiel ist das Stellelement 17" fest, d.h. unbewegbar relativ zu der Lenkervorrichtung 16 an der Lenkervorrichtung 16 gehalten. Ein Kulissenbauteil 19" mit einer Kulisse 18" ist relativ zu dem Kopfteil 11 bewegbar an dem Kopfteil 12 mittels einer Führung 21" geführt. Bei einer Bewegung des Kulissenbauteils 19" in Richtung q2 wird das Kopfteil 11 von der ersten Position gemäß Fig. 8 über die Position gemäß Fig. 9 in die zweite Position gemäß Fig. 10 bewegt. Die Antriebsvorrichtung 30" kann dabei z.B. einen Antrieb 23 aufweisen, welcher dem ersten und dem zweiten Ausführungsbeispiel entspricht.

Abweichend von den vorbeschriebenen Ausführungsbeispielen sind alternativ andere Konstellationen der Antriebsvorrichtungen 30, 30' und 30" möglich.

Z.B. sind in Abwandlung des ersten Ausführungsbeispiels nachfolgend aufgeführte Konstellationen möglich.

Alternativ zu dem ersten Ausführungsbeispiel könnte das Stellelement 17 auch an dem Kopfteil 11 gehalten sein und relativ zu diesem unbewegbar sein. Gemäß einer weiteren Alternative könnte das Kulissenbauteil 19 bewegbar an dem Lenker 16 bewegbar geführt sein und das Stellelement 17 ist fest mit dem Halteelement 13 oder an dem Kopfteil 11 verbunden. Die übrigen Merkmale dieser Abwandlungen entsprechen denen des ersten Ausführungsbeispiels.

In Abwandlung des zweiten Ausführungsbeispiels sind z.B. die nachfolgenden Konstellationen möglich. Gemäß einer weiteren Ausführung ist das Kulissenbauteil 19' bewegbar an dem Halteelement 13 und das Stellelement 17' fest an der Lenkervorrichtung 15 befestigt.

Gemäß einer weiteren alternativen Ausführung ist z.B. das Kulissenbauteil 19' bewegbar an dem Kopfteil 11 und das Stellelement 17' ist fest an einem der Lenker 15 angeordnet. Die übrigen Merkmale dieser Abwandlungen entsprechen denen des zweiten Ausführungsbeispiels.

Das bewegbare Kulissenbauteil 19' kann grundsätzlich an dem Halteelement 13 oder dem Kopfteil 11 und dass Stellelement 17' fest mit einer der Lenkervorrichtungen 15 oder 16 verbunden sein.

Auch kann das bewegbare Kulissenbauteil 19' grundsätzlich an einer der Lenkervorrichtungen 15 oder 16 bewegbar geführt sein und das Stellelement 17' mit einem der Bauteile Haltevorrichtung 33 oder Kopfteil 11 fest verbunden sein.

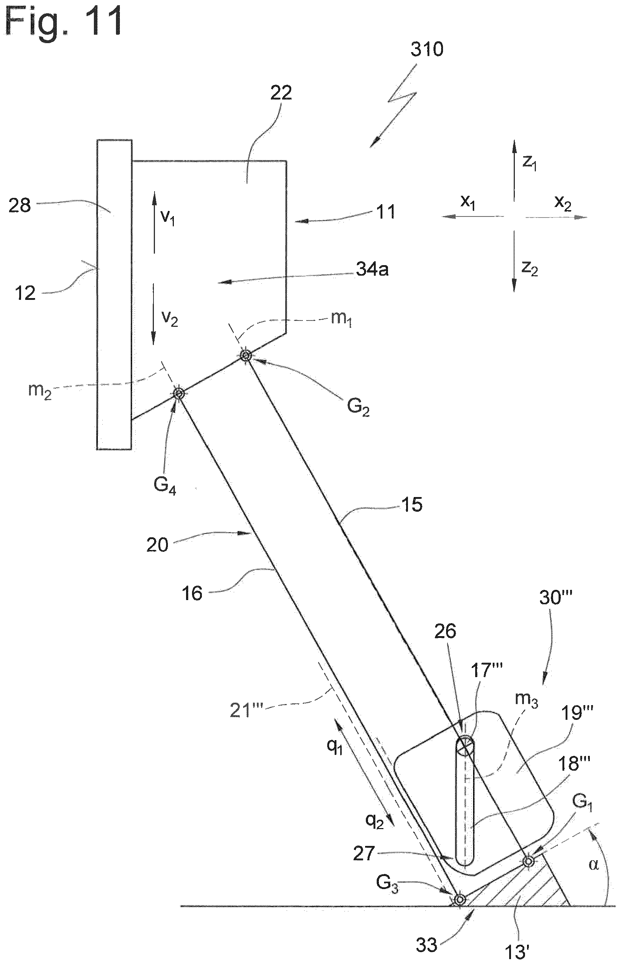

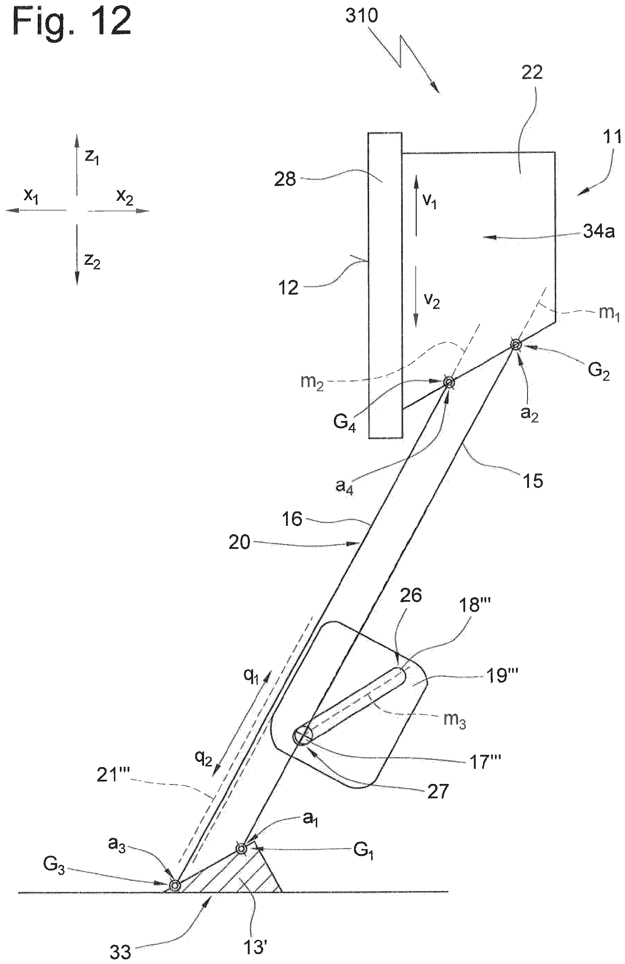

Gemäß einer weiteren alternativen Ausführung der Kopfstütze 310 mit einer Antriebsvorrichtung 30'", die in den Fig. 11 und 12 dargestellt ist, ist das Stellelement 17‴ an einem ersten Lenker fest gehalten und das Kulissenbauteil 19"`ist an einem zweiten Lenker bewegbar geführt. Im vorliegenden Beispiel ist das Stellelement 17‴ an dem Lenker 15 und das Kulissenbauteil 19‴ an dem Lenker 16 bewegbar geführt. Alternativ könnte aber ebenso das Kulissenbauteil bewegbar an dem Lenker 15 und das Stellelement unbewegbar relativ zu dem Lenker 16 an dem Lenker 16 gehalten sein.

Bei dieser Variante ist das Halteelement 13‴ von einer schiefen Ebene gebildet, wobei in einer ersten Endposition die Verstellvorrichtung 20‴ derart positioniert ist, dass die Mittelachsen m1 und m2 der Lenker 15 und 16 rechtwinklig zu der schiefen Ebene stehen. Das hat den Vorteil, dass sich der Abstand zwischen den Lenkern 15 und 16 bei der Bewegung von der ersten Endposition in die zweite Endposition kontinuierlich verkleinert und bei der Bewegung von der zweiten Endposition in die erste Endposition kontinuierlich vergrößert. Auf diese Weise wird die Steuerung wesentlich vereinfacht. Alle anderen Bestandteile der Kopfstütze sind unverändert geblieben.

Eine Höhenverstellung des Kopfteils 11 in die Richtungen z1 und z2 kann unabhängig von der Ausführung der Antriebsvorrichtung 30, 30' und 30" und der Position der Verstellvorrichtung 20 stattfinden, indem das Halteelement 13 in die Richtungen z1 und z2 verstellbar ist. Dazu kann das Halteelement 13 mit Tragstangen versehen sein, die in rückenlehnenfesten Führungshülsen in verschiedenen Höhenpositionen z.B. mittels einer Verriegelungsvorrichtung in bekannter Weise befestigbar sind.

Alternativ oder zusätzlich kann eine Kopfanlageplatte 28 relativ zu dem Fortsatz 22 in die Richtungen v1 und v2 verstellbar an dem Fortsatz 22 geführt sein. Hierfür kann die Kopfanlageplatte 28 nicht dargestellte Führungselemente aufweisen, die mit Führungselementen an dem Fortsatz 22 zusammenwirken. Mittels einer Fixiervorrichtung ist die Kopfanlageplatte 28 z.B. in mehreren Stufen oder stufenlos in der jeweiligen Relativposition zu dem Fortsatz 22 fixierbar.

Die Antriebsvorrichtung 30 umfasst z.B. einen Antrieb 23 mit einem Motor 25 und einem Getriebe 29 um das Kulissenbauteil 19' zu verlagern. Der Antrieb 23 ist nicht erfindungswesentlich, d.h., es können geeignete Elemente gewählt werden.

Bei einer linearen Verstellung ist z.B. ein Spindelantrieb als Getriebe 29 geeignet, wobei von dem Motor 25 eine Spindel 31 oder eine Spindelmutter 32 angetrieben wird, mit welcher das Kulissenbauteil 19' verbunden ist. Z.B. wird gemäß Fig. 2 die mit einem Gewinde versehene Spindel 31 von dem Motor 25 drehbar angetrieben, so dass sich die Spindelmutter 32, deren Gewinde mit dem Gewinde der Spindelmutter 32 in Eingriff ist, parallel zu der Längsachse m2 bewegt. Die Spindelmutter 32 ist derart mit dem Kulissenbauteil 19, 19' oder 19" verbunden, dass sich das Kulissenbauteil - je nach Drehrichtung der Spindel 31 - in die gewünschte Richtung bewegt.

Ein Spindelantrieb hat z.B. den Vorteil, dass die Selbsthemmung das Kopfteil 11 in der eingestellten Position fixiert. Mit anderen Worten, es ist keine separate Verriegelungsvorrichtung zum Fixieren des Kopfteils in der eingestellten Position notwendig.

Ist das Kulissenbauteil 19 auf einer nicht-linearen Bahn geführt, kann z.B. ein Linearantrieb verwendet werden, welcher derart bewegbar gelagert ist, dass ein Antriebsteil dem Kulissenbauteil 19 folgen kann.

Um die Kräfte zu verringern, die zwischen der Kulisse 18 und dem Kulissenelement 25 wirken, können in Bezug auf alle Ausführungsbeispiele z.B. wenigstens zwei Kulissen 18, 18' oder 18" und eine entsprechende Anzahl Stellelemente 17, 17' oder 17" vorgesehen sein. Z.B. wirkt eine erste bewegbar geführte Kulisse 18' mit einem Stellelement 17' zusammen, das fest an der ersten Lenkervorrichtung 15 angeordnet ist und eine parallel zu der ersten Kulisse 18' geführte und bewegte zweite Kulisse 18' wirkt mit einem Stellelement 17' zusammen, das fest mit der zweiten Lenkervorrichtung 16 oder mit einem quer zu der Bewegungsrichtung zu dem Lenker 15 bzw. 16 versetzt angeordneten Lenker verbunden ist.

## Patentansprüche

1. Kopfstütze mit einem Kopfteil (11) und mit einer Haltevorrichtung (33) umfassend wenigstens ein Halteelement (13) zur unbewegbaren oder verstellbaren Lagerung des Kopfteils (11) an einem Fahrzeugsitz und mit einer Verstellvorrichtung (20) umfassend eine Viergelenkvorrichtung (14) mit wenigstens einer ersten Lenkervorrichtung (15) und einer zweiten Lenkervorrichtung (16), mit welcher das Kopfteil (11) relativ zu dem Halteelement (13) zwischen einer ersten Position und einer zweiten Position bewegbar mit dem Halteelement (13) verbunden ist, mit einer Antriebsvorrichtung (30, 30') mit welcher die Position des Kopfteils (11) relativ zu dem Halteelement (13) zwischen der ersten Position und der zweiten Position veränderbar und / oder fixierbar ist, **dadurch gekennzeichnet, dass** die Antriebsvorrichtung (30, 30') eine Kulisse (18, 18') umfasst, welche an einem ersten Bauteil der Viergelenkvorrichtung (14) mittels einer Führung (21, 21') auf einer definierten Bahn bewegbar geführt ist und dass ein Stellelement (17, 17'), welches in die Kulisse (18, 18') eingreift an einem zweiten Bauteil der Viergelenkvorrichtung (14) fest angeordnet ist.

2. Kopfstütze nach einem der vorangehenden Ansprüche, **dadurch gekennzeichnet, dass** die Kulisse (18, 18') bewegbar an dem Halteelement (13) oder an dem Kopfteil (11) geführt ist und das Stellelement (17, 17') fest mit einer der Lenkervorrichtungen (15, 16) verbunden ist oder dass die Kulisse (18, 18') bewegbar an einer der Lenkervorrichtungen (15, 16) geführt ist und das Stellelement (17, 17') mit dem Halteelement (13) oder mit dem Kopfteil (11) fest verbunden ist.

3. Kopfstütze nach einem der vorangehenden Ansprüche, **dadurch gekennzeichnet, dass** die Kulisse (18, 18') bewegbar an einer ersten der Lenkervorrichtungen (15, 16) geführt ist und das Stellelement (17, 17') fest mit einer zweiten der Lenkervorrichtungen (15, 16) verbunden ist.

4. Kopfstütze, **dadurch gekennzeichnet, dass** jede Lenkervorrichtung (15, 16) wenigstens ein Schwenkgelenk (G1, G3) mit dem Halteelement (13) und wenigstens ein Schwenkgelenk (G2, G4) mit dem Kopfteil (11) bildet.

5. Kopfstütze nach einem der vorangehenden Ansprüche, **dadurch gekennzeichnet, dass** die Kulisse (18, 18') mittels der Führung (21, 21') linear bewegbar ist.

6. Kopfstütze nach einem der vorangehenden Ansprüche, **dadurch gekennzeichnet, dass** die Führung (21, 21') für ein Kulissenbauteil (19, 19', 19") der Kulisse (18, 18') in Form wenigstens einer zweiten Kulisse ausgebildet ist, wobei das Stellelement (17, 17') in beiden Kulissen geführt ist.

7. Kopfstütze nach einem der vorangehenden Ansprüche, **dadurch gekennzeichnet, dass** eine Längsmittelachse (m3) der Kulisse (18, 18') ist entsprechend einer Bewegungsbahn konstruiert, welche ein Stellelement (17, 17') relativ zu einem Kulissenbauteil (19, 19') oder einer Kulissenstruktur durchläuft, während der sich das Kopfteil (11) zwischen der ersten Position und der zweiten Position bewegt und während sich zugleich das Stellelement (17, 17') oder das Kulissenbauteil (19') zwischen einer primären Position und einer sekundären Position innerhalb der Führung (21, 21') bewegt.

8. Kopfstütze nach einem der vorangehenden Ansprüche, **dadurch gekennzeichnet, dass** die Lenkervorrichtungen (15, 16) der Viergelenkvorrichtung (14) unterschiedliche Längen (L1, L2) aufweisen.

9. Kopfstütze nach einem der vorangehenden Ansprüche, **dadurch gekennzeichnet, dass** Längsmittelachsen (m1, m2) der Lenkervorrichtungen (15, 16) der Viergelenkvorrichtung (14) parallel oder nichtparallel zueinander angeordnet sind.

10. Kopfstütze nach einem der vorangehenden Ansprüche, **dadurch gekennzeichnet, dass** jede Lenkervorrichtung (15, 16) wenigstens zwei quer zu einer Verstellrichtung (x1, x2) versetzt angeordnete Lenker (24a, 24b) aufweist, wobei ein erster Lenker (24) an einem ersten Seitenbereich (34a) des Kopfteils (11) und ein zweiter Lenker (24) an einem zweiten Seitenbereich (34b) des Kopfteils (11) angelenkt ist.

11. Kopfstütze nach einem der vorangehenden Ansprüche, **dadurch gekennzeichnet, dass** die Haltevorrichtung (33) verstellbar an einem Fahrzeugsitz lagerbar ist.

12. Kopfstütze nach einem der vorangehenden Ansprüche, **dadurch gekennzeichnet, dass** wenigstens zwei Gelenke (G1, G3, G2, G4) der Viergelenkvorrichtung (14) in Verstellrichtung hintereinander angeordnet sind.

13. Kopfstütze nach einem der vorangehenden Ansprüche, **dadurch gekennzeichnet, dass** eine Kopfanlageplatte (28) relativ zu einem Fortsatz (22) des Kopfteils (11) bewegbar an dem Fortsatz (22) gelagert ist.

14. Kopfstütze nach einem der vorangehenden Ansprüche, **dadurch gekennzeichnet, dass** das Stellelement (17, 17') oder die Kulisse (18, 18') von einer Antriebseinrichtung (23) angetrieben ist, die einen Motor (25) und ein Getriebe (29) umfasst.

15. Kopfstütze nach einem der vorangehenden Ansprüche, **dadurch gekennzeichnet, dass** die Antriebsvorrichtung (30, 30') mit einer Bedienvorrichtung bedienbar ist.

## Claims

1. Headrest with a head part (11) and with a holding device (33) comprising at least one holding element (13) for the immoveable or adjustable mounting of the head part (11) on a vehicle seat and with an adjustment device (20) comprising a four-articulation device (14) with at least one first control arm device (15) and one second control arm device (16) with which the head part (11) is connected to the holding element (13) so as to be moveable relative to the holding element (13) between a first position and a second position, with a drive device (30, 30') with which the position of the head part (11) can be altered and/or fixed relative to the holding element (13) between the first position and the second position, **characterized in that** the drive device (30, 30') comprises a link (18, 18') which is guided on a first component of the four-articulation device (14) so as to be moveable by means of a guide (21, 21') on a defined path and **in that** an adjusting element (17, 17') which engages in the link (18, 18') is fixedly arranged on a second component of the four-articulation device (14).

2. Headrest according to claim 1, **characterized in that** the link (18, 18') is guided so as to be moveable on the holding element (13) or on the head part (11) and the adjusting element (17, 17') is fixedly connected to one of the control arm devices (15, 16) or **in that** the link (18, 18') is guided so as to be moveable on one of the control arm devices (15, 16) and the adjusting element (17, 17') is fixedly connected to the holding element (13) or to the head part (11).

3. Headrest according to one of the preceding claims, **characterized in that** the link (18, 18') is guided so as to be moveable on a first of the control arm devices (15, 16) and the adjusting element (17, 17') is fixedly connected to a second of the control arm devices (15, 16).

4. Headrest, **characterized in that** each control arm device (15, 16) forms at least one pivot joint (G1, G3) with the holding element (13) and at least one pivot joint (G2, G4) with the head part (11).

5. Headrest according to one of the preceding claims, **characterized in that** the link (18, 18') is linearly moveable by means of the guide (21, 21').

6. Headrest according to one of the preceding claims, **characterized in that** the guide (21, 21') for a link component (19, 19', 19") of the link (18, 18') is configured in the form of at least one second link, the adjusting element (17, 17') being guided in both links.

7. Headrest according to one of the preceding claims, **characterized in that** a longitudinal centre axis (m3) of the link (18, 18') is constructed according to a movement path which an adjusting element (17, 17') follows relative to a link component (19, 19') or a link structure, during which the head part (11) moves between the first position and the second position and while at the same time the adjusting element (17, 17') or the link component (19') moves between a primary position and a secondary position within the guide (21, 21').

8. Headrest according to one of the preceding claims, **characterized in that** the control arm devices (15, 16) of the four-articulation device (14) are of different lengths (L1, L2).

9. Headrest according to one of the preceding claims, **characterized in that** longitudinal centre axes (m1, m2) of the control arm devices (15, 16) of the four-articulation device (14) are arranged parallel or non-parallel to one another.

10. Headrest according to one of the preceding claims, **characterized in that** each control arm device (15, 16) has at least two control arms (24a, 24b) arranged offset transversely to an adjustment direction (x1, x2), a first control arm (24) being articulated to a first side region (34a) of the head part (11) and a second control arm (24) being articulated to a second side region (34b) of the head part (11).

11. Headrest according to one of the preceding claims, **characterized in that** the holding device (33) is adjustably mountable on a vehicle seat.

12. Headrest according to one of the preceding claims, **characterized in that** at least two articulations (G1, G3, G2, G4) of the four-articulation device (14) are arranged one behind the other in the adjustment direction.

13. Headrest according to one of the preceding claims, **characterized in that** a head support plate (28) is mounted so as to be moveable on the extension (22) relative to an extension (22) of the head part (11).

14. Headrest according to one of the preceding claims, **characterized in that** the adjusting element (17, 17') or the link (18, 18') is driven by a drive device (23) which comprises a motor (25) and a gear (29).

15. Headrest according to one of the preceding claims, **characterized in that** the drive device (30, 30') can be operated with an operating device.

## Revendications

1. Appuie-tête avec une partie de tête (11) et avec un dispositif de maintien (33) comprenant au moins un élément de maintien (13) pour monter de façon inamovible ou réglable la partie de tête (11) sur un siège de véhicule, avec un dispositif de réglage (20) comprenant un dispositif de quadrilatère articulé (14) doté d'au moins un premier dispositif d'articulation (15) et d'un deuxième dispositif d'articulation (16), avec lequel la partie de tête (11) est reliée de façon mobile à l'élément de maintien (13) entre une première position et une deuxième position par rapport à l'élément de maintien (13), et avec un dispositif d'entraînement (30, 30') avec lequel la position de la partie de tête (11) par rapport à l'élément de maintien (13) peut être modifiée et/ou fixée entre la première position et la deuxième position, **caractérisé en ce que** le dispositif d'entraînement (30, 30') comprend une coulisse (18, 18') qui est guidée en déplacement sur une trajectoire définie sur une première pièce du dispositif de quadrilatère articulé (14) au moyen d'un guide (21, 21') et qu'un élément de réglage (17, 17') qui pénètre dans la coulisse (18, 18') est disposé sur une deuxième pièce du dispositif de quadrilatère articulé (14).

2. Appuie-tête selon une des revendications précédentes, **caractérisé en ce que** la coulisse (18, 18') est guidée en déplacement sur l'élément de maintien (13) ou sur la partie de tête (11) et que l'élément de réglage (17, 17') est relié de façon fixe avec un des dispositifs d'articulation (15, 16) ou que la coulisse (18, 18') est guidée en déplacement sur un des dispositifs d'articulation (15, 16) et que l'élément de réglage (17, 17') est relié de façon fixe avec l'élément de maintien (13) ou avec la partie de tête (11).

3. Appuie-tête selon une des revendications précédentes, **caractérisé en ce que** la coulisse (18, 18') est guidée en déplacement sur un premier des dispositifs d'articulation (15, 16) et que l'élément de réglage (17, 17') est relié de façon fixe avec un deuxième des dispositifs d'articulation (15, 16).

4. Appuie-tête **caractérisé en ce que** chaque dispositif d'articulation (15, 16) forme au moins une articulation pivotante (G1, G3) avec l'élément de maintien (13) et au moins une articulation pivotante (G2, G4) avec la partie de tête (11).

5. Appuie-tête selon une des revendications précédentes, **caractérisé en ce que** la coulisse (18, 18') peut se déplacer de façon linéaire au moyen du guide (21, 21').

6. Appuie-tête selon une des revendications précédentes, **caractérisé en ce que** le guide (21, 21') est configuré sous la forme d'au moins une deuxième coulisse pour une pièce de coulisse (19, 19', 19") de la coulisse (18, 18'), l'élément de réglage (17, 17') étant guidé dans les deux coulisses.

7. Appuie-tête selon une des revendications précédentes, **caractérisé en ce qu'**un axe central longitudinal (m3) de la coulisse (18, 18') est construit selon une trajectoire de déplacement qui traverse un élément de réglage (17, 17') par rapport à une pièce de coulisse (19, 19') ou à une structure de coulisse, tandis que la partie de tête (11) se déplace entre la première position et la deuxième position et tandis que, simultanément, l'élément de réglage (17, 17') ou la pièce de coulisse (19') se déplace entre une position primaire et une position secondaire à l'intérieur du guide (21, 21').

8. Appuie-tête selon une des revendications précédentes, **caractérisé en ce que** les dispositifs d'articulation (15, 16) du dispositif de quadrilatère articulé (14) présentent des longueurs différentes (L1, L2).

9. Appuie-tête selon une des revendications précédentes, **caractérisé en ce que** des axes centraux longitudinaux (m1, m2) des dispositifs d'articulation (15, 16) du dispositif de quadrilatère articulé (14) sont disposés parallèlement ou non parallèlement entre eux.

10. Appuie-tête selon une des revendications précédentes, **caractérisé en ce que** chaque dispositif d'articulation (15, 16) comporte au moins deux articulations (24a, 24b) disposées transversalement à une direction de réglage (x1, x2), une première articulation (24) étant articulée à une première zone latérale (34a) de la partie de tête (11) et une deuxième articulation (24) à une deuxième zone latérale (34b) de la partie de tête (11).

11. Appuie-tête selon une des revendications précédentes, **caractérisé en ce que** le dispositif de maintien (33) peut être monté de façon réglable sur un siège de véhicule.

12. Appuie-tête selon une des revendications précédentes, **caractérisé en ce qu'**au moins deux articulations (G1, G2, G3, G4) du dispositif de quadrilatère articulé (14) sont disposés l'un derrière l'autre dans la direction de réglage.

13. Appuie-tête selon une des revendications précédentes, **caractérisé en ce qu'**une plaque repose-tête (28) est montée sur un prolongement (22) de la partie de tête (11) de façon mobile par rapport à ce prolongement (22).

14. Appuie-tête selon une des revendications précédentes, **caractérisé en ce que** l'élément de réglage (17, 17') ou la coulisse (18, 18') est entraîné par un dispositif d'entraînement (23) qui comprend un moteur (25) et une transmission (29).

15. Appuie-tête selon une des revendications précédentes, **caractérisé en ce que** le dispositif d'entraînement (30, 30') peut être commandé avec un dispositif de commande.
